(19) **Europäisches Patentamt / European Patent Office / Office européen des brevets**

(11) **EP 1 610 615 B1**

(12) **EUROPEAN PATENT SPECIFICATION**

(45) Date of publication and mention of the grant of the patent:
**13.02.2013 Bulletin 2013/07**

(21) Application number: **04723544.5**

(22) Date of filing: **26.03.2004**

(51) Int Cl.:
*A21D 13/00* (2006.01)    *A23L 1/0522* (2006.01)
*A23L 1/09* (2006.01)    *A23G 3/34* (2006.01)

(86) International application number:
**PCT/EP2004/003267**

(87) International publication number:
**WO 2004/084640 (07.10.2004 Gazette 2004/41)**

(54) **MULTIPURPOSE DRY MIX APPLICABLE IN SWEET AND SAVOURY FOOD APPLICATIONS**

MEHRZWECKTROCKENMISCHUNG ZUR VERWENDUNG FÜR SÜSSE UND PIKANTE LEBENSMITTEL

MELANGE SEC POLYVALENT UTILISABLE DANS DES APPLICATIONS D'ALIMENTS SUCRES ET SALES

(84) Designated Contracting States:
**AT BE BG CH CY CZ DE DK EE ES FI FR GB GR HU IE IT LI LU MC NL PL PT RO SE SI SK TR**

(30) Priority: **28.03.2003  EP 32511962**

(43) Date of publication of application:
**04.01.2006  Bulletin 2006/01**

(73) Proprietor: **Cerestar Holding B.V.**
**4551 LA  Sas Van Gent (NL)**

(72) Inventors:
• SARNEEL, Frans, Johan
  NL-4574 RJ Zuiddorpe (NL)
• PEREMANS, Johan, Augusta, Maria, Antoon
  B-2180 Ekeren (BE)

(74) Representative: **Wilkinson, Stephen John**
**Stevens, Hewlett & Perkins**
**1 St. Augustine's Place**
**Bristol BS1 4UD (GB)**

(56) References cited:
**EP-A- 0 189 161    EP-A- 0 811 633**
**DD-A- 229 587    GB-A- 1 294 426**
**US-A- 4 414 238**

• TESCH S ET AL: "STABILIZATION OF EMULSIONS BY OSA STARCHES" JOURNAL OF FOOD ENGINEERING, BARKING, ESSEX, GB, vol. 54, no. 2, 2002, pages 167-174, XP001184187 ISSN: 0260-8774

**Description**

Technical Field

The present invention relates to a multipurpose dry mix which has a good freeze-thaw stability, good baking stability and viscosity stability in acid, alkaline and neutral conditions. It comprises fat, carbohydrates, and proteins, and emulsifiers and can be mixed with a variety of food ingredients.

Background of the invention

In the food processing industry, high quality, convenience, longer shelf-life, easier storage conditions and high appeal to sight, touch, taste and smell is demanded.

New trends such as more natural, healthier, more nutrious, environmental friendliness, and freshness, are but a few examples of what is requested. Preferably tasty food with more convenience is wanted.

Products comprising tasty fillings are currently prepared according to two distinct processes. The first process is a two-step process wherein the casing is baked separately from the filling, followed by injection of the filling. This prevents dehydration of the filling and/or leaking of the filling during baking of the casing. In the second process, the casing is filled with the filling and the casing is coated to prevent leaking and/or dehydration of the filling.

EP 951 845 provides a process for manufacturing savoury products comprising a filling surrounded by a crisp coating. The filling is deposited inside a flour-based shell coated with beaten egg.

GB 2 172 184 relates to a sandwich-type snack product comprising a bread casing and savoury filling. The casing is prepared from a dough of whole meal flour, dried gluten, egg protein and diacetyl tartaric acid esters. Prior to baking the snack is brushed with melted butter.

DD 229 587 describes a filling suitable for waffles and the filling and the waffle casing are sticking good together.

EP 0 194 780 relates to a sandwich-type product and especially the type of casing is-described in detail.

GB 2 154 851 relates to a filled cooked dough product, its frozen counterpart and a method of reheating the same.

There is a need for having a filling which can be applied in sweet as well as in savoury products, which further can be used in cold, baked and fried applications, and which can be frozen and re-heated, while the filling is stable, non-leaking,

The current invention provides such a versatile product.

Summary of invention

The current invention relates to a multipurpose dry mix for use in spreads and/or filling of baked, fried, uncooked savoury and/or sweet tasting products characterised in that it comprises

  10-20% w/w gluten;
  20-45% w/w starch hydrolysates;
  5-15% w/w floor;
  1-10% w/w starch n-octenyl succinate; and
  15-28% w/w fat;

and wherein

  a) a mixture (B) having a dry substance content of 64%, obtained by mixing 300g of the multipurpose dry mix and 170ml of water, has a freeze-thaw stability of at least 98% wherein said freeze-thaw stability is defined as (100%-((100 x the total amount of separated water (in ml)/(total weight (in grams) of mixture (B))), wherein the total amount of separated water is collected after performing three times a procedure wherein mixture (B) is subjected to freezing at -18°C for 24 hours, followed by thawing for 8 hours at ambient temperature, and collecting the separated water, and repeating twice said procedure;
  b) a mixture (C) having a dry substance content of 79%, obtained by mixing 300g of the multipurpose dry mix and 80ml of water, has a baking stability of 100%, wherein said baking stability is defined by baking 160g of mixture (C) in an alumina cup having a volume of 160ml at 180°C for 1 hour to obtain a baked mixture (C) and said baking stability of 100% corresponds to non-leaking of a mixture (C) and/or baked mixture (C) out of the alumina cup; and
  c) a mixture of (D) having a dry substance content of 31%, obtained by mixing 150g of the multipurpose dry mix and 330ml of water or buffer, has a stable viscosity under alkaline, acidic and neutral pH conditions measured on a Brabender viscogram between 50°C and 95°C with heating rate of 1.5°C/minute.

Preferably, the gluten is vital wheat gluten and/or vital wheat gluten developed in non-aqueous media.

In a further embodiment, the multipurpose dry mix of the invention comprises

a) 12-20% w/w gluten;
b) 22-40% w/w starch hydrolysates;
c) 7-12% w/w flour;
d) 2-8% w/w starch n-octenyl succinate;
e) 17-25% w/w fat.

The current invention also relates to a completed mix comprising:

a) the dry mix according to the present invention, and
b) a liquid selected from the group consisting of water, savoury sauce, sweet sauce, dressing, fruit puree, vegetable puree, dairy-based liquids and mixtures thereof,

wherein the weight ratio of dry mix to liquid is from 1:0.5 to 1:2.

Furthermore, the current invention relates to a food composition, which comprises:

a) meat, fish, poultry, seafood, rice, potato, dairy products, fruits and/or vegetables, and
b) the dry mix according to the present invention, and/or
c) the completed mix according to the present invention.

The current invention further relates to a food product selected from the group consisting of snacks, pies, pizza-like products, savoury filled products, sweet bakery products wherein the said food product comprises a layer on, under and/or around the completed mix according to the present invention, and/or the food composition according to the present invention. Said layer is pastry, crumble, bread, biscuits, sponge, cake batter, bread-crumbs, potato slices, potato mash, mixtures thereof and the like.

The current invention further relates to a spread comprising the completed mix of the present invention.

Description of the figures

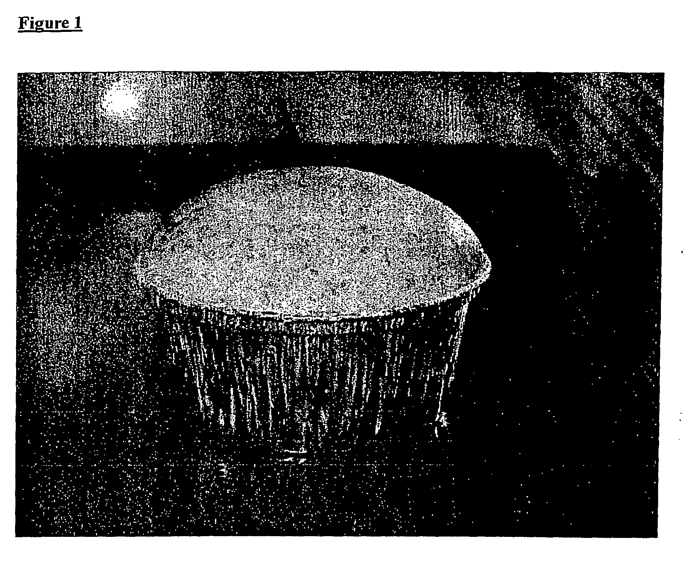

Figure 1: digital photograph of a baked completed mix, which was baked at 180°C for 1 hour and said completed mix is consisting of 80ml water and 300g dry mix (45.7g vital wheat gluten, 82.3g starch hydrolysate (Cerestar C*Dry MD 01921), 16.0g sorbitol (Cerestar C*Sorbidex P16616), 7.3g defatted soya (Cargill), 27.4g wheat flour (Meneba Lepelaar), 27.4g dried glucose syrup (Cerestar C*DryCream 01978), 13.7g n-OSA starch (Cerestar C*EmTex 12688), 9.1g n-OSA starch (Cerestar C*EmTex 16328), 6.8.6g fat ((Vana Grasa 80C), 1.8g Salt, 0.5g Ascorbic acid, 0.1g Cysteine.

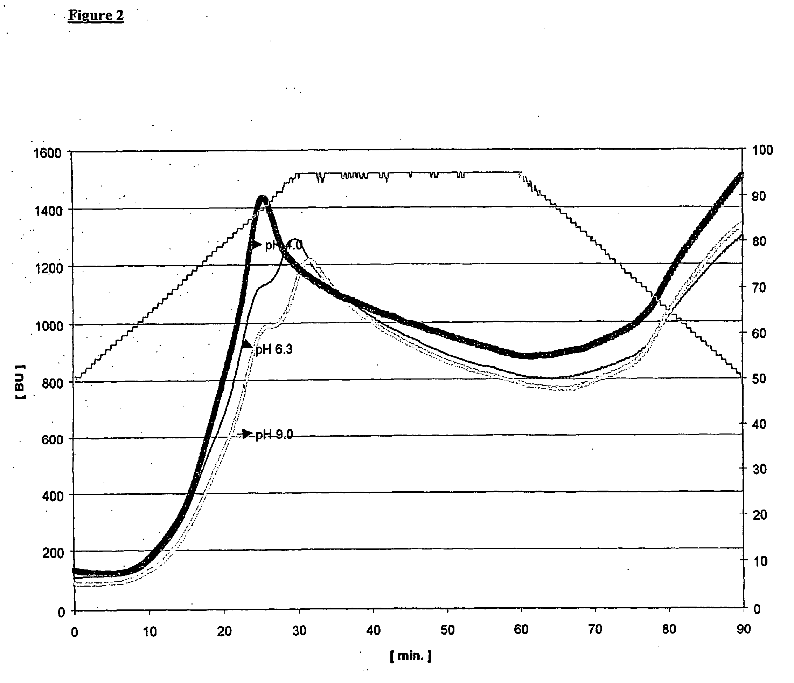

Figure 2: Brabender viscogram recorded between 50-95°C at a heating rate of 1.5°C/min for:

a) 150g dry mix in 330ml water (pH as is (6.3))
b) 150g dry mix in Buffer pH 4 (Titrisol Merck 1.09884)
c) 150g dry mix in Buffer pH 9 (Titrisol Merck 1.09889)

The dry mix is 22.85g vital wheat gluten, 41.15g starch hydrolysate (Cerestar C*Dry MD 01921), 8.0g sorbitol (Cerestar C*Sorbidex P16616), 3.65g defatted soya (Cargill), 13.7g wheat flour ((Meneba Lepelaar), 13.7g dried glucose syrup (Cerestar C*DryCream 01978), 6.85g n-OSA starch (Cerestar C*EmTex 12688), 4.55g n-OSA starch (Cerestar C*EmTex 06328), 34.4g fat (Vana Grasa 80C), 0.9g Salt, 0.25g Ascorbic acid, 0.05g Cysteine.

Figure 3A: digital photograph of frozen savoury completed mix and ham in puff paste.

Figure 3B: digital photograph of baked savoury completed mix with ham and puff paste.

Figure 4: digital photograph of completed mix placed in snack cups covered with shredded cheese.

Figure 5: digital photograph of baked sweet application of completed mix mixed with peaches in pastry.

Figure 6A: digital photograph of cake with food composition comprising slices of apples and raisins after baking, freezing and thawing.

Figure 6B: digital photograph of cake with food composition comprising slices of apples and raisins after baking, freezing.

Detailed description

The current invention relates to a multipurpose dry mix for use in spreads and/or filling of baked, fried, uncooked savoury and/or sweet tasting products characterised in that it comprises

10-20% w/w gluten;
20-45% w/w starch hydrolysates;
5-15% w/w flour;
1-10% w/w starch n-octenyl succinate; and
15-28% w/w fat,

and wherein

a) a mixture (B) having a dry substance content of 64%, obtained by mixing 300g of the multipurpose dry mix and 170ml of water, has a freeze-thaw stability of at least 98% wherein said freeze-thaw stability is defined as (100%-((100 x the total amount of separated water (in ml)/(total weight (in grams) of mixture (B))), wherein the total amount of separated water is collected after performing three times a procedure wherein mixture (B) is subjected to freezing at -18°C for 24 hours, followed by thawing for 8 hours at ambient temperature, and collecting the separated water, and repeating twice said procedure;

b) a mixture (C) having a dry substance content of 79%, obtained by mixing 300g of the multipurpose dry mix and 80ml of water, has a baking stability of 100%, wherein said baking stability is defined by baking 160g of mixture (C) in an alumina cup having a volume of 160ml at 180°C for 1 hour to obtain a baked mixture (C) and said baking stability of 100% corresponds to non-leaking of a mixture (C) and/or baked mixture (C) out of the alumina cup; and

c) a mixture of (D) having a dry substance content of 3 1 %, obtained by mixing 150g of the multipurpose dry mix and 330ml of water or buffer, has a stable viscosity under alkaline, acidic and neutral pH conditions measured on a Brabender visiogram between 50oC and 95oC with heating rate of 1.5°C/minute.

For a multipurpose mix, it is essential that a mixture comprising said dry mix is freeze-thaw stable. The freeze-thaw stability of the dry mix is determined by measuring the separation of water after freezing and thawing. The test is as follows: 300g of the dry mix is solubilised in 170ml of water for obtaining mixture (B), which is corresponding to a dry substance of 64%. Three plastic cups are each filled with 110g of said mixture (B). These cups are placed for 24 hours in a standard freezer at -18oC. After 24 hours the three cups are thawed at ambient temperature (25°C). The separated water after 8 hours thawing of one of these cups is collected and the two other cups are placed again after 8 hours thawing for 24 hours in the freezer at -18.°C. The thawing and collection of the separated water is repeated further two times. The total amount of the separated water is collected and the freeze-thaw stability is expressed as

$$(100\% - ((100 \text{ x the total amount of separated water in ml})/(\text{total weight of mixture (B) (in grams)}),$$

i.e. a total amount of separated water (after 3 cycles of freezing and thawing) of 2ml based upon 110g of mixture (B) gives a freeze-thaw stability of 98%. A freeze-thaw stability of 98.5% corresponds with a total amount of separated water of 1.65ml. Most preferably the freeze-thaw stability is more than 99.1%, which corresponds to less than 1ml of total amount of separated water.

A further essential feature of a multipurpose mix is its baking stability. For measuring the baking stability of the dry mix, 300g of dry mix are solubilised in 80ml of water for preparing mixture (C), having a dry substance of 79%. Alumina cups are filled with 160g of said mixture (C) and are baked for 60 minutes at 180°C in a Probat oven.

100% baking stability means that neither the baked nor unbaked mixture is leaking out the alumina cup, Furthermore, the baked product is very uniformly baked (see Figure 1). The volume can rise in an appropriate way but none of the mixture is leaking out of the cup.

The dry mix of the current invention is further characterised by its stable viscosity under neutral, as well as alkaline or acidic pH conditions when recording the Brabender viscograms between 50°C and 95°C with heating rate of 1.5°C/min. The viscograms are recorded for 150g dry mix solubilised in 330ml water or buffer for obtaining mixture (D), at dry substance of 31%. Products that have a stable viscosity in neutral, alkaline and acid stable give a profile as demonstrated in Figure 2. For a stable viscosity there is no significant drop of the viscosity during heating in acid, neutral or alkaline media. Especially the high acid stability (at pH 4) is important and this further supports its multifunctional application.

The dry mix of the current invention is multifunctional (is multipurpose dry mix), and it can be combined with sweet, bitter, sour and salty flavours without any limitation. It can be applied as is, i.e. without any extra treatment such as cooking, baking or frying. Alternatively the dry mix of the current invention is suitable for cooking, baking or frying as well, and it can be frozen and followed by re-heating in a conventional way or in the microwave without damaging the mix.

The fat, in the dry mix of the invention, can be from animal or vegetable source.

The dry mix contains wheat gluten. Wheat gluten is defined as vital wheat gluten, fractions of vital wheat gluten, modified wheat gluten, (partially) hydrolysed wheat gluten, vital wheat gluten developed in non-aqueous media, and mixtures thereof. The gluten in the current dry mix can be vital gluten developed in non-aqueous media according to the process described in EP 1 066 759. Preferably vital wheat gluten is applied.

The dry mix contains flour and starch hydrolysate.

Starch hydrolysates are produced by the controlled acid or enzymatic hydrolysis of starch and can be subdivided into two specific categories, maltodextrins and glucose syrups and are characterized by DE number (dextrose equivalent). In fact, DE number is a measurement of the percentage of reducing sugars present in the syrup and calculated as dextrose on a dry weight basis. Maltodextrins have a DE number up to 20 whereas glucose syrups have a DE number greater than 20.

The flour in the dry mix of the invention can be cereal flour, preferably any type of wheat flour, more preferably white wheat flour, most preferably a white wheat flour having a protein content of 10.5-11% (w/w).

The dry mix contains starch n-octenyl succinate, more preferably stabilised starch n-octenyl succinate. Starch n-octenyl succinate (= nOSA-starch) is further characterised by its substitution degree which varies between 0.2 to 3%, preferably between 0.5 to 2.5% (determined by HPLC). The starch n-octenyl succinate can be undextrinized, dextrinized, cooked-up, pregelatinized, stabilised and/or mixtures thereof. These products can be prepared either way: first succinilation with n-octenyl succinic anhydride, followed by dextrination, gelatinisation or cooking-up or haying first a dextrinised, gelatinised or cooked-up product followed by succinilation.

For obtaining the stabilised starch n-octenyl succinate, it can be treated with active chlorine and can be prepared according to the process described in EP 1811633.

Preferably the carbohydrates are mixtures of starch hydrolysates, flour, n-OSA-starch and polyols. The polyol can be selected from tetritols, penitols, hexitols, and higher polyols, and the like. The polyol can be but is not limted to erythritol, xylitol, arabinitol, sorbitol, mannitol, iditol, galactitol, maltitol, isomaltitol, isomalt, lactitol, mixtures thereof and the like. More preferably the polyol is sorbitol.

The dry mix further can contain in minor amounts amino acids, antioxidants, vitamins, trace elements, electrolytes, edible acids, flavours and/or mixtures. In respect of sweet applications intense sweeteners can be added as well.

Among the major physiological electrolytes are sodium, potassium, chloride, calcium, and magnesium. Further trace elements can be included such as chromium, copper, selenium, iron, manganese, molybdenym, zinc and mixtures thereof.

Among the vitamins one can range vitamin A, vitamin C, vitamin E, vitamin $B_{12}$, and the like.

The edible acids can be selected from phosphoric acid, citric acid, malic acid, succinic acid, adipic acid, gluconic acid, tartaric acid, fumaric acid and mixtures thereof.

The flavours can be selected among the edible flavours which will be applicable according to the multifunctional application of the current disclosed dry mix.

The amount of flavour depends upon the flavour or flavours selected, the flavour impression desired and the form of flavour used.

If desired, colouring agents can also be added. Any soluble colouring agent approved for food use can be utilized for the current invention.

An intense sweetener, which can be used as non-nutritive sweetener can be selected from the group consisting of aspartame, acesulfame salts such as aceslfame-K, saccharins (e.g. sodium and calcium salts), cyclamates (e.g. sodium and calcium salts), sucralose, alitame, neotame, steviosides, glycyrrhizin, neohesperidin dihydrochalcone, monatin, monellin, thaumatin, brazzein and mixtures thereof.

The dry mix of the invention comprises

    a) 10-20% w/w gluten;
    b) 20-45% w/w starch hydrolysates;
    c) 5-15% w/w flour;
    d) 1-10% w/w starch n-octenyl succinate, and
    e) 15-28% w/w fat.

Preferably, the dry mix of the invention comprises

    a) 12-20% w/w gluten;
    b) 22-40% w/w starch hydrolysates;

c) 7-12% w/w flour;
d) 2-8% w/w starch n-octenyl succinate;
e) 17-25% w/w fat.

In a preferred embodiment the dry mix of the current invention comprises 15% vital wheat gluten, 37% starch hydrolysate, 5% sorbitol, 9% wheat flour, 8% n-OSA starch and 23% fat.

In a further preferred embodiment the dry mix is comprising 15% vital wheat gluten, 37% starch hydrolysate, 5% sorbitol, 9% wheat flour, 8% n-OSA starch and 23% fat, and 2.4% defatted soya. The dry mix can be further enriched with skimmed milk powder, vitamins, amino acids, flavours, trace elements, electrolytes, mixtures thereof and the like.

The current invention relates to a completed mix comprising:

a) the dry mix according to the present invention, and
b) a liquid selected from the group consisting of water, savoury sauce, sweet sauce, dressing, fruit puree, vegetable puree, dairy-based liquids and mixtures thereof

wherein the weight ratio of dry mix to liquid is from 1:0.5 to 1:2.

Typical examples of this liquid, but without any limitation, are water, milk, tomato sauce, ketchup, cheese sauce, Bolognaise sauce, vegetable based sauce, buttermilk, liquid pudding, yoghurt, fruit flavoured sauces (e.g; cherry sauce, rhubarb sauce, peach sauce, blueberry cassis sauce) apple puree, apricots puree, rhubarb puree, vegetable puree, caramel sauce, chocolate sauce, mocha fudge sauce, honey sauce, cream Anglaise, nut topping, and the like.

Surprisingly, it is found that the dry mix of the current invention can be mixed with either of these sauces i.e. savoury as well as sweet tasting sauces, and yet the original taste of the sauce is not hampered. This is for example further proven by a taste panel, wherein 20 persons are requested to compare the taste of apple puree (commercial product) with a completed mix consisting of one part (weight) dry mix (comprising 15% vital wheat gluten, 37% starch hydrolysate, 5% sorbitol, 9% wheat flour, 8% n-OSA starch, 23% fat, 2.4% defatted soya) and 2 parts (weight) of said apple puree (commercial product). The apple flavour is still distinct present and the overall acceptability is as good as the commercial apple puree. Although 1/3 of the weight of the original apple puree is replaced by the dry mix of the current invention, the overall acceptability is equally good and yet the completed mix has far more potential (multipurpose use and application) compared to the commercial apple puree.

Additives such as flavours, amino acids, edible acids, vitamins, and/or colours can be added to the completed mix.

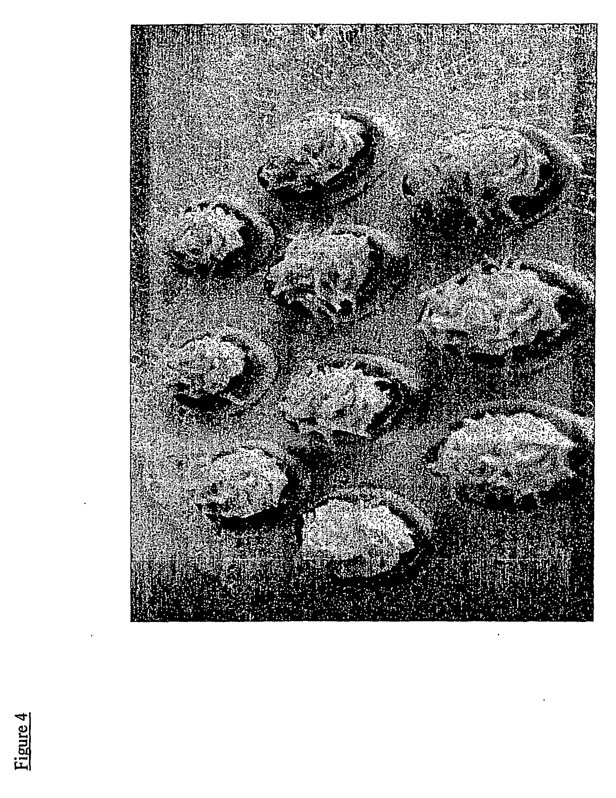

One part (weight) of a dry mix comprising 15% (weight) vital wheat gluten, 31% starch hydrolysate, 5% sorbitol, 9% wheat flour, 23% fat, 8 % n-OSA starch, 6% skimmed milk powder, and 2.4% defatted soya, is mixed with two parts of buttermilk. This completed mix can be applied as such (as spread) (see figure 4)or can be placed on a layer suitable for baking.

One part (weight) of a dry mix comprising 15% (weight) vital wheat gluten, 31% starch hydrolysate, 5% sorbitol, 9% wheat flour, 23% fat, 8 % n-OSA starch, 6% skimmed milk powder, and 2.4% defatted soya, is mixed with 0.9 parts of liquid, for example cheese sauce, for obtaining completed mix.

One part (weight) of a dry mix comprising 15% (weight) vital wheat gluten, 31% starch hydrolysate, 5% sorbitol, 9% wheat flour, 23% fat, 8 % n-OSA starch, 6% skimmed milk powder, and 2.4% defatted soya, is mixed with 1 part of liquid, for example Bolognaise sauce, for obtaining completed mix.

Said completed mix can be obtained by mixing first the ingredients of the dry mix followed by addition of the liquid. The completed mix can equally well be prepared by mixing all ingredients, including liquid, all together in one pot. This mixing step is optionally followed by freezing, baking, or frying eventually again followed by freezing, and re-heating. The re-heating can be performed in a conventional manner or in a microwave oven.

This completed mix can be consumed as such, as spread onto bread, toast or biscuits, snacks, snack cups, or it can be placed into a casing (e.g. pastry, sponge, crumble, biscuits, cake batter, bread, bread-crumbs) and it can be baked, fried, or cooked.

Surprisingly, it is observed that the fried completed mix is not deformed, non-leaking, and the originally volume of the non-fried completed mix is only to a minor (negligible) extend increased after frying. Preferably the fried completed mix has the same volume as the original non-fried completed mix.

Furthermore, the current invention relates to a food composition which is comprising:

a) meat, fish, poultry, seafood, rice, potato, dairy products, fruits and/or vegetables, and
b) the dry mix according to the present invention, and/or
c) the completed mix according to the present invention.

Preferably, a food composition is comprising meat, fish, poultry, seafood, rice, potato, dairy products, fruits and/or vegetables, and the completed mix wherein the dry mix is already mixed with a liquid. Eventually, the mix of the completed mix and the dry mix can be put together with the other ingredients such as meat, fish, poultry, seafood, rice, potato, dairy products, fruits and/or vegetables for obtaining the food composition.

The food composition can be consumed as such, or it can be baked, cooked or fried. Re-heating is also possible in a conventional oven or microwave oven. Before and/or after baking or frying the baked or fried food composition can be stored in the freezer. Afterwards it can be re-heated in a microwave oven or heated in a conventional oven. Alternatively, the food composition is partially baked, or parfried followed by freezing and final baking.

Alternatively, it can be placed into a casing (e.g. pastry, crumble, biscuits, sponge, cake batter, bread, bread-crumbs) and it can be baked, or fried.

The current invention further relates to a food product selected from the group consisting of snacks, pies, pizza-like products, savoury filled products, sweet bakery products and said food product is comprising a layer on, under and/or around the completed mix according to the present invention, and/or the food composition according to the present invention. Said layer is pastry, crumble, sponge, bread, biscuits, cake batter, bread-crumbs, potato slices, potato mash, mixtures thereof and the like.

Further ingredients can be binders, further additives such as flavours, amino acids, edible acids, vitamins, and/or colours.

Furthermore, the sweet bakery products can be filled bread, bread-rolls, pound cake, sponge cake, chiffon cake, cheesecake, fruitcake, pancakes, waffles, biscuits, layer cake and gingerbread and the like.

The dry mix of the current invention is suitable for any product requiring a filling and which is then consumed as such, baked or fried.

One part (weight) of a dry mix comprising 15% (weight) vital wheat gluten, 31% starch hydrolysate, 5% sorbitol, 9% wheat flour, 23% fat and 8 % n-OSA starch, 6% skimmed milk powder, 2.4% defatted soya, is mixed with 0.9 parts of cheese sauce and a little bit of ham is put on a puff paste. The total can then be baked for obtaining savoury snacks.

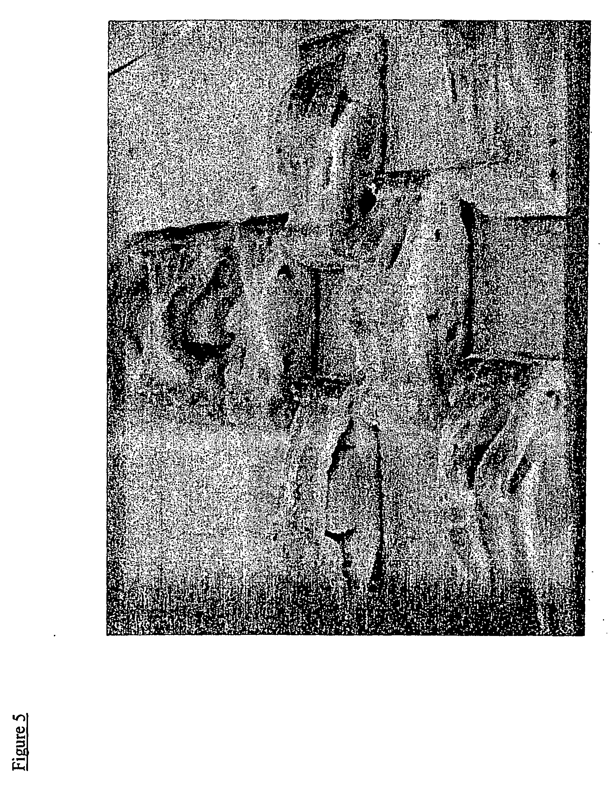

35 weight% of a dry mix comprising 15% vital wheat gluten, 37% starch hydrolysate, 5% sorbitol, 9% wheat flour, 7% n-OSA starch, 23% fat, and 2.4% defatted soya, is mixed with 65% by weight of apple puree (commercial base) and is then brought on top of laminated pastry dough. Pieces of peaches can be placed on top of the completed filling, and the total is closed with pastry dough layer, before baking. The final result is a sweet bakery product (see figure 5).

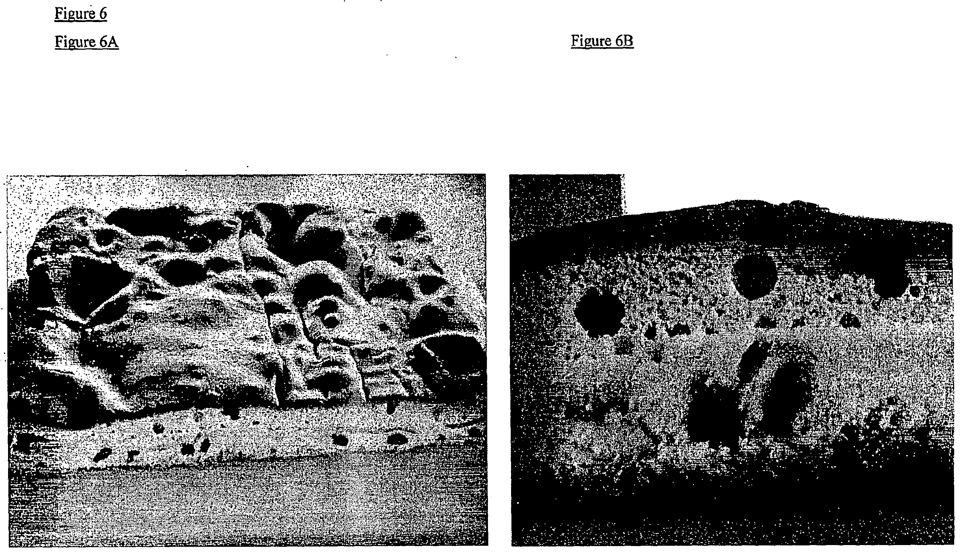

21% (by weight of a dry mix comprising 15% vital wheat gluten, 37% starch hydrolysate, 5% sorbitol, 9% wheat Flour, 7% n-OSA starch, 23% fat, and 2.4% defatted soya, is mixed with 10% cottage cheese™ and 39% buttermilk. According to needs fruit pieces such as raisins and apples can be added. The total can then be brought on top of butter dough and is further covered with a cake batter. Everything is placed in the oven and a filled cake is obtained. Said product can be stored in the freezer without suffering from freeze-thaw instability (see figure 6A, 6B).

The food product can be obtained by simply mixing all the ingredients and eventually followed by baking, frying or freezing. Prior or after mixing with meat, fish, poultry, seafood, rice, potato, dairy products, fruits and/or vegetables, the mix is baked, fried or frozen. After this treatment the product can be frozen and re-heated in a conventional manner or in a microwave oven.

The current invention further relates to a spread comprising the completed mix of the present invention. Further ingredients can be additives such as flavours, amino acids, edible acids, vitamins, and/or colours.

The current invention has the following advantages:

- providing a unique multipurpose dry mix without existing equivalent
- completed mix or food composition can be used as such (in cold preparations and/or snacks or toasts)
- it can be baked, fried, frozen prior or after baking or frying process and re-heated in microwave.
- any taste can be obtained by mixing with appropriate sauce and/or food components such as meat, fish, poultry, seafood, rice, potato, dairy products, fruits and/or vegetables
- applicable in savoury and sweet tasting products
- The preparation process is a simple one-step process and no leaking or dehydration of the filling is observed.
- Final product is not suffering from detaching between casing and filling.
- The current invention provides a completed mix that is freeze-thaw stable, short and which has a smooth texture.
- The current invention is allowing a convenient instant and cold preparation.
- It has a high water/fat binding stability, e.g. to pick up the drip water of vegetables, to bind oil/fat
- The completed mix has a very good viscosity, ideal to pump and/or to spread
- The completed mix or food composition remains smooth and stable after heating and/or re-heating
- The dry mix has an optimal neutral taste
- The dry mix has a long shelf life time and is non-dusting and is easy to transport
- It has a constant quality and a very high acid and heat stability
- It has a good shear stability and good emulsion stability

The current invention is illustrated by way of the following examples.

Example 1

| Dry mix - ingredients | Weight (g) |
|---|---|
| Vital wheat gluten (Cerestar) | 50 |
| Starch hydrolysate (Cerestar C☆Dry MD 01921) | 90 |
| Sorbitol (Cerestar C☆Sorbidex P16616) | 17.5 |
| Defatted Soya (Cargill) | 8 |
| Wheat Flour (Meneba Lepelaar) | 30 |
| Dried glucose syrup (Cerestar C☆DryCream 01978) | 30 |
| n-OSA starch (Cerestar C☆EmTex 12688) | 15 |
| n-OSA starch (Cerestar C☆EmTex 06328) | 10 |
| Fat (Vana Grasa 80C) | 75 |
| Salt | 2 |
| Ascorbic acid | 0.6 |
| Cysteine | 0.1 |
| **Total** | 328.2 |

The dry mix ingredients were mixed together.

**1. Freeze-thaw stability**

The total amount of separated water after one, two and three freeze-thaw cycles was determined (procedure).

Equipment:

Hobart mixer N50
Whisk NSF-N50
Plastic cups with the following dimensions: Heighth 42mm; Diameter bottom: 53mm, top 62 mm.
Funnel, diameter 110mm
Faltenfilter, diameter 185mm
Calibrated cylinder: 50ml
Freezer: Bosch ***

Method:

The Hobart bowl was filled with 170 ml water.
300 g of dry mix (45.7g vital wheat gluten, 82.3g starch hydrolysate (Cerestar C☆Dry MD 01921), 16.0g sorbitol (Cerestar C☆Sorbidex P16616), 7.3g defatted soya (Cargill), 27.4g wheat flour (Meneba Lepelaar), 27.4g dried glucose syrup (Cerestar C☆DryCream 01978), 13.7g n-OSA starch (Cerestar C☆EmTex 12688), 9.1g n-OSA starch (Cerestar C☆EmTex 06328), 68.6g fat (Vana Grasa 80C), 1.8g Salt, 0.5g Ascorbic acid, 0.1g Cysteine) was added to the water while stirring for 30 seconds at slow speed using whisk.
After water pickup the completed mix was stirred for two minutes at speed two.
Three plastic cups were filled each with 110 grams of completed mix and then covered with plastic lid. The three filled cups were placed in a standard freezer (Bosch ***) at -18 °C.
After 24 hours of storage one cup was emptied on the Faltenfilter. The Faltenfilter was placed into a funnel and emptied in a calibrated cylinder of 50 ml. During 8 hours of thawing at room temperature, the amount of separated water was collected and determined. The other filled cups remained for 8 hours thawing at room temperature (25°C), and were placed in the freezer again.

This procedure was repeated two times and the total amount of separated water was determined.
The total amount of separated water (after the three collections) was less than 1 ml.

The freeze thaw stability (in percentage) = (100% - ((100 x the total amount of separated water in ml)/(total weight (in grams) of completed mix)),

$$\text{Freeze thaw stability (\%)} = (100 - (100 \times (<1) / 110)$$

$$\text{Freeze thaw stability (\%)} > 99.1\%$$

## 2. Baking Stability

Equipment:

Tray lab oven: Probat Model: Domino, Type: 2/62/81/20
Hobart N50
Whisk NSF-N50
Aluminium cups: volume 160ml.

Method:

The Hobart bowl was filled with 80 ml water.
300 g dry mix (45.7g vital wheat gluten, 82.3g starch hydrolysate (Cerestar C☆Dry MD 01921), 16.0g sorbitol (Cerestar C☆Sorbidex P16616), 7.3g defatted soya (Cargill), 27.4g wheat flour (Meneba Lepelaar), 27.4g dried glucose syrup (Cerestar C☆DryCream 01978), 13.7g n-OSA starch (Cerestar C☆EmTex 12688), 9.1g n-OSA starch (Cerestar C☆EmTex 06328), 68.6g fat (Vana Grasa 80C), 1.8g Salt, 0.5g Ascorbic acid, 0.1g Cysteine) was added to the water, while stirring for 30 seconds at slow speed, by using whisk for obtaining the completed mix.
After water pickup, the completed mix was stirred for two minutes at speed two.
The aluminium cup was filled with 160 grams of completed mix.
The filled cup was placed in Probat oven and the completed mix was baked for 60 minutes at 180°C.

Observations:

During baking the unbaked completed mix was not exceeding the border of the cup. Volume increase was acceptable but boiling effect of the filling during baking was completely excluded and no leaking of the baked or unbaked completed mix was observed. The completed mix was uniformly (homogeneously) baked.
Baking stability is 100%: neither the baked non unbaked mix was leaking.
The result is displayed in Figure 1.

## 3. Brabender viscograms

Equipment:

- Viscograph E (Brabender)
- Refrigerated water bath, set at 15° C
- 600 ml low-form glass beaker
- Laboratory balance having a precision of 0.01 g
- Plastic rod or spoon

Reagents:

- Standard laboratory demineralised water
- Buffer pH 4.0: Titrisol 1.09884 (Merck)
- Buffer pH 9.0: Titrisol 1.09889 (Merck)

Procedure

For the standard calibration and adjustment procedure for the Viscograph E see the instruction manual (Brabender (Nr 12014))

Sample preparation

- Place a 600 ml low-form glass beaker on the laboratory balance, and zero the balance.
- Weigh accurately 150.0 g dry mix (45.7g vital wheat gluten, 82.3g starch hydrolysate (Cerestar C*Dry MD 01921), 16.0g sorbitol (Cerestar C☆Sorbidex P16616), 7.3g defatted soya (Cargill), 27.4g wheat flour (Meneba Lepelaar), 27.4g dried glucose syrup (Cerestar C☆DryCream 01978), 13.7g n-OSA starch (Cerestar C☆EmTex 12688), 9.1g n-OSA starch (Cerestar C☆EmTex 06328), 68.6g fat (Vana Grasa 80C), 1.8g Salt, 0.5g Ascorbic acid, 0.1g Cysteine), to the nearest 0.01 g.
- Precisely 330.0 g demineralised water, or buffer (of pH 4 or pH 9) was added to the dry mix.
- The dry mix was dispersed completely by using the plastic rod or spoon.

Settings

Temperature profile :

| | | | |
|---|---|---|---|
| Starting temperature So | : 50 °C | Heating rate | : 1.5 °C/min |
| Nominal temperature $S_1$ | : 95 °C | Holding time $t_1$ | : 30 min |
| Nominal temperature $S_2$ | : 50 °C | Cooling rate | : 1.5 °C/min |
| Holding time $t_2$ | : End | | |

When homogeneity was achieved, the slurry was poured quantitatively into the cup of the Brabender viscometer, and the measuring head and the sensor were inserted.
The obtained results are displayed in Figure 2.
It is clearly seen that the viscosity of the dry mix of the current invention is heat stable in acid, neutral and alkaline media.

Example 2

| Dry mix - ingredients | Weight (g) |
|---|---|
| Vital Wheat Gluten (Cerestar) | 50 |
| Skimmed milk powder | 20 |
| Starch hydrolysate (C☆Dry GL 01921) | 90 |
| Starch hydrolysate (C☆Dry MD 01904) | 10 |
| Sorbitol (C☆Sorbidex P 16616) | 17.5 |
| Defatted Soya (Cargill) | 8 |

(continued)

| Dry mix - ingredients | Weight (g) |
|---|---|
| Wheat Flour (Meneba Lepelaar) | 30 |
| n OSA starch (C☆EmTex 12688) | 15 |
| n OSA starch (C☆EmTex 06328) | 10 |
| Fat (Vana Grasa 80C) (De Kievit) | 75 |
| Salt | 1 |
| Ascorbic acid | 0.05 |
| Cysteine | 0.1 |
| Total: | 326.65 |

75 g of dry mix was mixed with 150 g buttermilk followed by 12.5g pregelatinised starch (Cerestar C☆Hiform A 12747). After stirring for about 3 minutes, about 7g of said complete mix was taken and 3g apples were added and flavoured with cinnamon for obtaining the food composition.

The food composition was packed in pastry dough and baked during 15 minutes at 220°C.

The result was a sweet bakery product.

Example 3

| Dry mix - Ingredients | Weight (g) |
|---|---|
| Vital Wheat Gluten | 50 |
| Skimmed milk powder | 20 |
| Starch hydrolysate (C☆Dry MD01910) | 90 |
| Starch hydrolysate (C*Dry MD 01904) | 10 |
| Sorbitol (C☆Sorbidex P16616) | 17.5 |
| Defatted Soya (Cargill) | 8 |
| Wheat Flour (Meneba Lepelaar) | 30 |
| n OSA starch (C☆EmTex 12688) | 15 |
| n OSA starch (C☆EmTex 06328) | 10 |
| Fat (Vana Grasa 80C) (De Kievit) | 75 |
| Salt | 1 |
| Ascorbic acid | 0.05 |
| Cysteine | 0.1 |
| Total: | 326.65 |

To 150 g of said dry mix was added 138.5 g of cheese sauce (prepared from one package of KNORR cheese sauce which was dissolved in 220 ml of water, brought to boil and allowed to boil for 1 minute), followed by 58 g Philadelphia™ nature and 3.5 g Parmesan™ Ex, for obtaining the completed mix.

The completed mix was mixed for about 3 minutes.

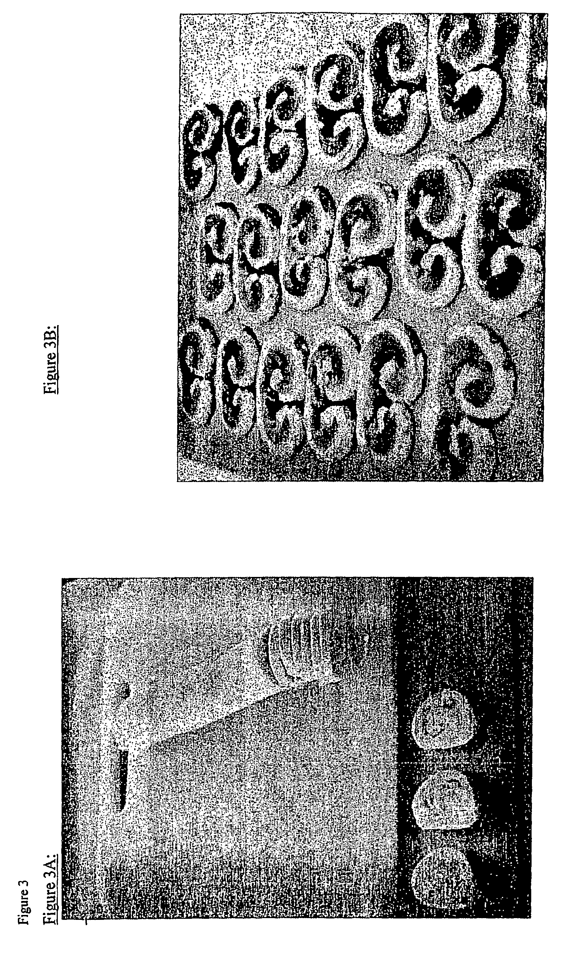

To make the snacks, a layer of said savoury completed mix was placed with a little bit of ham on a puff paste. The weight of the filling together with the dough amounted to about 100 g. These rolls were placed in the refrigerator. After the rolls became hard, they could easily be cut in small pieces. (see Figure 3A)

These pieces were baked during 15 minutes at 220 °C. The result was a savoury snack with a soft filling. These snacks were further dried for 40 minutes at 140°C. The result is a crispy snack (see Figure 3B).

Example 4

| Dry mix - Ingredients | Weight (g) |
|---|---|
| Vital Wheat Gluten (Cerestar) | 50 |
| Skimmed milk powder | 20 |
| Starch hydrolysate (C☆Dry GL 01921) | 90 |
| Starch hydrolysate (C☆Dry MD 01904) | 10 |
| Sorbitol (C☆Sorbidex P16616) | 17.5 |
| Defatted Soya (Cargill) | 8 |
| Wheat Flour (Meneba Lepelaar) | 30 |
| n OSA starch (C☆EmTex 12688) | 15 |
| n OSA starch (C☆EmTex 06328) | 10 |
| Fat (Vana Grasa 80C) (De Kievit) | 75 |
| Salt | 1 |
| Ascorbic acid | 0.05 |
| Cysteine | 0.1 |
| Total: | 326.65 |

150 g dry mix was mixed with 25 g of pregelatinised starch (C☆HiForm A 12747). 300 g buttermilk (strawberry taste) was added, followed by 50 g of margarine.
The ingredients were mixed for about 3 minutes to obtain the completed mix.
The thus prepared completed mix was utilised as spread on toast.

Example 5 -

The dry mix of example 1 was applied in the following quantities:

| Ingredients | Weight percentage |
|---|---|
| Dry mix | 31.7 % |
| Margarine (commercial base) | 9.8 % |
| Buttermilk (commercial base) | 58.5 % |

The dry mix was mixed for 3 minutes with the margarine and buttermilk.
Snack cups were filled with the previously prepared formulation (completed mix). The cups were further decorated with shredded cheese.
The result is displayed in Figure 4.

Example 6

| Dry mix | Weight (g) |
|---|---|
| Vital Wheat Gluten (Cerestar) | 50 |
| Skimmed milk powder | 20 |
| Starch hydrolysate (C☆Dry GL 01921) | 90 |
| Starch hydrolysate (C☆Dry MD 01904) | 10 |
| Polyol (C☆Sorbidex P16616) | 17.5 |
| Defatted Soya (Cargill) | 8 |
| Wheat Flour (Meneba Lepelaar) | 30 |
| n OSA starch (C☆EmTex 12635) | 15 |
| n OSA starch (C☆EmTex 06328) | 10 |
| Fat (Vana Grasa 80C) (De Kievit) | 75 |
| Salt | 1 |
| Ascorbic acid | 0.05 |
| Cysteine | 0.1 |
| Total: | 326.65 |

300 g of dry mix was added to 300g Bolognaise sauce (commercial base), and 20 g pregelatinised distarch phosphate (Cerestar, C☆Pulp Tex 12930)

Everything was mixed for about 3 minutes and the savoury completed mix was cooled for 30 minutes in the refrigerator. The savoury completed mix was rolled into strands. Each strand was cut in pieces of ± 40 g. These pieces were rolled in a solution of Batter starch/ water of 50g/55 g and afterwards in bread crumbs.

The obtained croquets were frozen and afterwards were frying stable

Example 7

The dry mix of example 1 was applied in the following ratio:

35% by weight of the dry mix and 65% by weight of apple puree (commercial base) The dry mix was added to the apple puree and the total was mixed for 3 minutes.

The completed mix was brought on top of laminated pastry dough. Pieces of peaches were placed on top of the completed filling, and the total was closed with pastry dough layer.

The filled pastry was baked for 28 minutes at 220°C.

The obtained result is displayed in Figure 5.

Example 8

The dry mix of example 1 was applied in the following weight ratios:

| Ingredients | Weight (g) |
|---|---|
| dry mix | 300 |
| Pregelatinised starch (Cerestar C☆ HiForm A 12747) | 50 |
| Buttermilk (commercial base) | 700 |
| Cottage cheese™ (commercial base) | 150 |
| Raisins | 125 |
| Total | 1325 |

The dry mix was mixed with the pregelatinised starch and the total was then added to the cottage cheese™ and the buttermilk. This mixing was performed with a wish in the Hobart mixer at speed two. The raisins were added after this mixing, and manually mixed through the previous prepared filling.

The baking plate (30 x 40 cm) was covered with standard laminated butter dough (thickness 12mm), 1150 g of filling (incl. Raisins) was poured on the butter dough.

This filling was covered with 350 g sliced apples and finally 1000 g of cake dough was divided on top of the sliced apples.

The cake dough itself was prepared from :

| Damco Cake Mix™ | 1000 g |
|---|---|
| Cake Margarine (Puratos) | 500 g |
| Whole eggs | 500 g |

This cake was baked during 60 min. in the Probat oven (T above =170°C; T $_{below}$ = 225°C). The cake was cooled, and stored at 6°C for two hours and cut in pieces of 50 grams.

The filling was baked well and there was no boiling effect observed. After cooling the cake, it can easily be cut into pieces without damaging the filling.

After cooling, the baked cake was packed and placed in the freezer.

After storage for 4 months at -18°C, it was checked how the filling was looking, directly after taking out of the freezer and after thawing.

The result is displayed in Figure 6A (after thawing), and Figure 6B while frozen.

**Claims**

1. A. multipurpose dry mix for use in spreads and/or filling of baked, fried, uncooked savoury and/or sweet tasting products **characterised in that** it comprises

    10-20% w/w gluten;
    20-45% w/w starch hydrolysates;
    5-15% w/w flour;
    1-10% w/w starch n-octenyl succinate; and
    15-28% w/w fat,

    and wherein

    a) a mixture (B) having a dry substance content of 64%, obtained by mixing 300g of the multipurpose dry mix and 170ml of water, has a freeze-thaw stability of at least 98% wherein said freeze-thaw stability is defined as (100%-((100 x the total amount of separated water (in ml)/(total weight (in grams) of mixture (B))), wherein the total amount of separated water is collected after performing three times a procedure wherein mixture (B) is subjected to freezing at -18°C for 24 hours, followed by thawing for 8 hours at ambient temperature, and collecting the separated water, and repeating twice said procedure;

    b) a mixture (C) having a dry substance content of 79%, obtained by mixing 300g of the multipurpose dry mix and 80ml of water, has a baking stability of 100%, wherein said baking stability is defined by baking 160g of mixture (C) in an alumina cup having a volume of 160ml at 180°C for 1 hour to obtain a baked mixture (C) and said baking stability of 100% corresponds to non-leaking of a mixture (C) and/or baked mixture (C) out of the alumina cup; and

    c) a mixture of (D) having a dry substance content of 31%, obtained by mixing 150g of the multipurpose dry mix and 330ml of water or buffer, has a stable viscosity under alkaline, acidic and neutral pH conditions measured on a Brabender viscogram between 50°C and 95°C with heating rate of 1.5°C/minute.

2. A dry mix according to claim 1, **characterised in that** it comprises:

    a) 12-20% w/w gluten;
    b) 22-40% w/w starch hydrolysates;
    c) 7-12% w/w flour;
    d) 2-8% w/w starch n-octenyl succinate;

e) 17-25% w/w fat.

3. A completed mix comprising:

   a) a dry mix according to either claim 1 or claim 2, and
   b) a liquid selected from the group consisting of water, savoury sauce, sweet sauce, dressing, fruit puree, vegetable puree, dairy-based liquids and mixtures thereof

   wherein the weight ratio of dry mix to liquid is from 1:0.5 to 1:2..

4. A food composition **characterised in that** it comprises:

   a) meat, fish, poultry, seafood, rice, potato, dairy products, fruits and/or vegetables, and
   b) a dry mix according to either claim 1 or claim 2, and/or
   c) a completed mix according to claim 3.

5. A food product selected from the group consisting of snacks, pies, pizza-like products, savoury filled products, sweet bakery products **characterised in that** said food product comprises a layer on, under and/or around the completed mix according to claim 3, and/or the food composition according to claim 4.

6. A food product according to claim 5, **characterised in that** said layer is pastry, crumble, bread, biscuits, sponge, cake batter, bread-crumbs, potato slices and/or potato mash.

7. A spread **characterised in that** it comprises a completed mix according to claim 3.

**Patentansprüche**

1. Mehrzwecktrockenmischung zur Verwendung in Aufstrichen und/oder Füllung von gebackenen, gebratenen, ungekochten pikant und/oder süß schmeckenden Produkten, **dadurch gekennzeichnet, dass** sie Folgendes umfasst:

   10-20 % (m/m) Gluten;
   20-45 % (m/m) Stärkehydrolysate;
   5-15 % (m/m) Mehl;
   1-10 % (m/m) Stärke-n-octenylsuccinat; und
   15-28 % (m/m) Fett,

   und worin

   a) eine Mischung (B) mit einem Trockensubstanzgehalt von 64 %, die durch Mischen von 300 g der Mehrzwecktrockenmischung und 170 ml Wasser erhalten wird, eine Gefrier-Tau-Stabilität von mindestens 98 % aufweist, worin die genannte Gefrier-Tau-Stabilität wie folgt definiert ist: (100 %-((100 x die Gesamtmenge an abgeschiedenem Wasser (in ml)/(Gesamtgewicht (in Gramm) der Mischung (B))), worin die Gesamtmenge an abgeschiedenem Wasser nach dreimaliger Durchführung einer Prozedur gesammelt wird, worin die Mischung (B) bei -18°C für 24 Stunden gefroren wird, anschließend für 8 Stunden bei Umgebungstemperatur aufgetaut wird und das abgeschiedene Wasser gesammelt wird und die genannte Prozedur zweimal wiederholt wird;
   b) eine Mischung (C) mit einem Trockensubstanzgehalt von 79 %, die durch Mischen von 300 g der Mehrzwecktrockenmischung und 80 ml Wasser erhalten wird, eine Backstabilität von 100 % aufweist, worin die genannte Backstabilität wie folgt definiert ist: durch Backen von 160 g der Mischung (C) in einem Aluminiumoxidbecher, der ein Volumen von 160 ml aufweist, bei 180°C für 1 Stunde, um eine gebackene Mischung (C) zu erhalten, und die genannte Backstabilität von 100 % dem Nichtauslaufen einer Mischung (C) und/oder gebackenen Mischung (C) aus dem Aluminiumoxidbecher entspricht; und
   c) eine Mischung von (D) mit einem Trockensubstanzgehalt von 31 %, die durch Mischen von 150 g der Mehrzwecktrockenmischung und 330 ml Wasser oder Puffer erhalten wird, eine stabile Viskosität unter alkalischen, sauren und neutralen pH-Bedingungen aufweist, die mit einem Brabender-Viskogramm zwischen 50°C und 95°C bei einer Heizrate von 1,5°C/Minute gemessen wird.

2. Trockenmischung nach Anspruch 1, **dadurch gekennzeichnet, dass** sie Folgendes umfasst:

a) 12-20 % (m/m) Gluten;
b) 22-40 % (m/m) Stärkehydrolysate;
c) 7-12 % (m/m) Mehl;
d) 2-8 % (m/m) Stärke-n-octenylsuccinat;
e) 17-25 % (m/m) Fett.

3. Fertiggestellte Mischung, die Folgendes umfasst:

a) eine Trockenmischung nach Anspruch 1 oder Anspruch 2, und
b) eine Flüssigkeit, die aus der Gruppe ausgewählt ist, die aus Folgenden besteht: Wasser, pikanter Soße, süßer Soße, Dressing, Fruchtpüree, Gemüsepüree, Flüssigkeiten auf Milchbasis und Mischungen davon,

worin das Gewichtsverhältnis von Trockenmischung zu Flüssigkeit von 1 : 0,5 bis 1 : 2 beträgt.

4. Lebensmittelzusammensetzung, **dadurch gekennzeichnet, dass** sie Folgendes umfasst:

a) Fleisch, Fisch, Geflügel, Meeresfrüchte, Reis, Kartoffel, Milchprodukte, Obst und/oder Gemüse, und
b) eine Trockenmischung nach Abspruch 1 oder Anspruch 2, und/oder
c) eine fertiggestellte Mischung nach Anspruch 3.

5. Lebensmittelprodukt, das aus der Gruppe ausgewählt ist, die aus Snacks, Pasteten, Pizza-ähnlichen Produkten, pikant gefüllten Produkten, süßen Backwaren besteht, **dadurch gekennzeichnet, dass** das genannte Lebensmittelprodukt eine Schicht auf, unter und/oder herum um die fertiggestellte Mischung nach Anspruch 3 und/oder die Lebensmittelzusammensetzung nach Anspruch 4 umfasst.

6. Lebensmittelprodukt nach Anspruch 5, **dadurch gekennzeichnet, dass** die genannte Schicht Teig, Streusel, Brot, Kekse, Biskuit, Kuchenteig, Semmelbrösel, Kartoffelscheiben und/oder Kartoffelmus ist.

7. Aufstrich, **dadurch gekennzeichnet, dass** er eine fertiggestellte Mischung nach Anspruch 3 umfasst.


## Revendications

1. Mélange sec polyvalent à utiliser dans des pâtes à tartiner et/ou une garniture de produits de dégustation salés et/ou sucrés cuits au four, frits, crus **caractérisé en ce qu'**il comprend

10 - 20 % poids/poids de gluten ;
20 - 45 % poids/poids d'hydrolysats d'amidon ;
5 - 15 % poids/poids de farine ;
1 - 10 % poids/poids de succinate de n-octényle d'amidon ; et
15 - 28 % poids/poids de graisse,

et dans lequel

a) un mélange (B) possédant une teneur en substance sèche de 64 % obtenu par mélange de 300 g du mélange sec polyvalent et de 170 ml d'eau, possède une stabilité à la congélation-décongélation d'au moins 98 % dans lequel ladite stabilité à la congélation-décongélation est définie comme (100 % - ((100 x quantité totale d'eau séparée (en ml) / (poids total (en grammes) du mélange (B))), où la quantité totale d'eau séparée est recueillie après la réalisation par trois fois d'une procédure dans laquelle le mélange (B) est soumis à une congélation à -18° C pendant 24 heures, suivi par une décongélation pendant 8 heures à la température ambiante, puis le recueil de l'eau séparée, et la répétition deux fois de ladite procédure ;
b) un mélange (C) possédant une teneur en substance sèche de 79 %, obtenu par mélange de 300 g du mélange sec polyvalent et de 80 ml d'eau, possède une stabilité de cuisson au four de 100 %, dans lequel ladite stabilité de cuisson au four est définie par la cuisson au four de 160 g de mélange (C) dans une coupelle en alumine ayant un volume de 160 ml à 180° C pendant 1 heure pour obtenir un mélange cuit au four (C) et ladite stabilité de cuisson au four de 100 % correspond à un mélange (C) et/ou un mélange cuit au four (C) qui ne fuit pas de la coupelle en alumine ; et
c) un mélange (D) possédant une teneur en substance sèche de 31 %, obtenu en mélangeant 150 g du mélange sec polyvalent et 330 ml d'eau ou de tampon, possède une viscosité stable dans des conditions de pH alcalin, acide et neutre mesurées sur un viscogramme de Brabender entre 50° C et 95° C avec une vitesse de montée en température de 1,5° C/minute.

**2.** Mélange sec selon la revendication 1, **caractérisé en ce qu'**il comprend :

a) 12 - 20 % poids/poids de gluten ;
b) 22 - 40 % poids/poids d'hydrolysats d'amidon ;
c) 7 - 12 % poids/poids de farine ;
d) 2 - 8 % poids/poids de succinate de n-octényle d'amidon ;
e) 17 - 25 % poids/poids de graisse.

**3.** Mélange complet comprenant :

a) un mélange sec selon soit la revendication 1, soit la revendication 2, et
b) un liquide sélectionné parmi le groupe constitué d'eau, de sauce salée, de sauce sucrée, de sauce pour salade, de purée de fruits, de purée de légumes, de liquides à base de produits laitiers et des mélanges de ceux-ci,

dans lequel le rapport pondéral du mélange sec sur le liquide est de 1 : 0,5 à 1 : 2.

**4.** Composition alimentaire **caractérisée en ce qu'**elle comprend :

a) de la viande, du poisson, de la volaille, des fruits de mer, du riz, de la pomme de terre, des produits laitiers, des fruits et/ou des légumes, et
b) un mélange sec selon soit la revendication 1, soit la revendication 2, et/ou
c) un mélange complet selon la revendication 3.

**5.** Produit alimentaire sélectionné parmi le groupe constitué d'en-cas, de tourtes, de produits similaires à de la pizza, de produits garnis salés, de produits boulangers sucrés, **caractérisé en ce que** ledit produit alimentaire comprend une couche sur, sous et/ou autour du mélange complet selon la revendication 3, et/ou la composition alimentaire selon la revendication 4.

**6.** Produit alimentaire selon la revendication 5, **caractérisé en ce que** ladite couche est de la pâte à tarte, du crumble, du pain, des biscuits, de la génoise, de la pâte à gâteau, de la chapelure, des tranches de pomme de terre et/ou de la purée de pomme de terre.

**7.** Pâte à tartiner **caractérisée en ce qu'**elle comprend un mélange complet selon la revendication 3.

Figure 1

**Figure 2**

Figure 3

Figure 3A:

Figure 3B:

Figure 4

Figure 5

Figure 6B

Figure 6

Figure 6A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 951845 A
- GB 2172184 A
- DD 229587
- EP 0194780 A
- GB 2154851 A
- EP 1066759 A
- EP 1811633 A